# EUROPEAN PATENT APPLICATION

(11) **EP 1 770 956 A1**
(43) Date of publication of application: **04.04.2007**
(21) Application number: 05256148.7
(22) Date of filing: 30.09.2005
(51) Int. Cl.: H04L 29/08

(54) **Information based on location and activity of a user**

(71) Applicant: BRITISH TELECOMMUNICATIONS public limited company, London EC1A 7AJ (GB)
(72) Inventor: The designation of the inventor has not yet been filed
(74) Representative: Lidbetter, Timothy Guy Edwin

(57) **Abstract**

The present invention relates to context or location aware computing, and in particular though not exclusively to providing an activity based view of a location. The invention provides a method for providing activity based information for a virtual location (100), and comprises determining the virtual location (410); automatically determining data about a process associated with an activity on a device within the virtual location (430); receiving at another device within the virtual location activity based information which is dependent on the determined process data (420).

## Description

### Field of the Invention

The present invention relates to context or location aware computing, and in particular though not exclusively to providing an activity based view of a location.

### Background of the Invention

The Internet and World Wide Web (The Web) have been successful in providing users with the ability to access information and computing or information technology (IT) services from virtually any location. This has been further enhanced by the development of wireless access technologies which in addition to enhancing the connectivity coverage, additionally provides the user with mobility. On the other hand, there has also been a growing demand for context aware provision of connectivity and IT services. Such services include the provision of local information such as nearby restaurants and the automatic connection to different types of networks depending on location, for example home or work. Numerous other examples of context aware services are increasingly available.

"Future of Location Based Experiences" by Steve Benford University of Nottingham, TSW0501, JISC Technology and Standards Watch, January 2005, describes various examples of context aware computing, including the ability of tourists to upload comments about a tourist attraction for later download by other tourists, and the ability to adjust the virtual location of a computer game depending on the actual physical location of the player.

The Massachusetts Institute of Technology (MIT) Media Lab Reality Mining Project at http://reality.media.mit.edu/ describes monitoring user activities of time and place using wireless identifiers such as Bluetooth ^{™} fixed equipment (eg printer) as locators. This information is used to model human interactions.

US2005/0020307 discloses configuring computing or electronic devices depending on the user's current context which in turn is related to their current location. For example a so configured device may only show secure work-related wireless connections when the user is at work, but any wireless connections when the user is elsewhere, for example at home.

US2004/0203851 discloses monitoring of activities the user engages in at a location for uploading to service providers serving that location; in order that they may better configure their services at that location based on user activity.

JP9053957 (English Abstract) discloses monitoring of activities over location and time on a device, for use in re-configuring the device to better service the user's habits.

### Summary of the Invention

In general terms the present invention provides a method and system for providing activity based information for a virtual location. The virtual location may be defined according to an actual physical or geographical location, or it may be defined solely according to the services provided there, for example a virtual location may be defined by a WiFi identifier which could change its physical location. The virtual location is also associated with the current and/or past activities performed there, for example by a high percentage of user media streaming in that virtual location. This information can be used by new devices entering the virtual location, or devices already in the virtual location, to reconfigure themselves, dependent on the activities of other devices in the virtual location. For example if the virtual location is associated with a library, this may result in a lot of wireless connections being established to download the library's information index, and this activity based information could be used to automatically present the user of a device entering the virtual location with an option to do the same activity. In another example, as more and more devices within a virtual location associated with a theatre start turning their device ringers off prior to the performance, this might prompt other user's who have not yet done this with the option to switch off their device ringers.

Such an arrangement eases operation of user interfaces on devices by automatically providing likely options for a user. Also the provision of an activity based view of a location allows a user to manually re-configure their device according to user preferences and expectations, for example the activities the user believes they are most likely to engage in. Users may set their device to automatically action (rather than manually action) local dynamic group activity such as the theatre example outlined above.

The activity information gathered about a virtual location may also be used by service providers supporting the virtual location, for example to rationalize their information delivery processes. This could include the caching of 'popular' information on a local server that is most likely to be requested by others in that location. Alternatively, likely information could be temporarily cached on the users device in anticipation of it being requested.

In one aspect the present invention provides a method of providing activity based information associated with a virtual location. The method comprises automatically determining data about a process on a device within the virtual location, the process associated with an activity; and receiving at another device activity based information which is dependent on the determined process data.

An embodiment provides a view of most popular information requested at this location, for example the top 10 WebPages viewed at this virtual location, or the most popular games. Alternatively or additionally the user device may be configured such that a user looking for places and times where people gather to play mobile a specific Bluetooth games is alerted by their mobile device that the virtual location they have just encountered is a 'gaming hotspot'.

The virtual location is defined by reference to services provided within a space or area, for example a WLAN having a specific WiFi BSSID and/or encryption key. Thus any device which is able to receive the corresponding WLAN beacon is said to be within the virtual location. The beacon provides a virtual location clue, and can be used by the device to identify that it has entered a predefined virtual location. The predefined virtual location may be stored on the device's memory, such that when it detects the corresponding signature or clue, it assumes it has entered the virtual location. Alternatively, the WLAN access point may transmit an identifier according to a predetermined protocol which the device is able to recognise. In another alternative, the device may send a request to a central server together with the virtual location clue or clues it has detected. In another alternative, a service provider such as a Wi-Fi access point associated with defining a virtual location may recognise devices that enter its network coverage area. This information can then be used by the server to forward a virtual location identifier and/or virtual location dependent activity based information. The virtual location clues will typically correspond to one or more wireless technologies, for example a WiFi and a Bluetooth beacon carrying a respective identifier which can be used together with the technology type (eg IEEE802.11g and BT v2).

The virtual location may or may not correspond with a geographical location, for example the definition of the virtual location may also include a range of GPS coordinates. On the other hand, where the virtual location is defined by reference to a WLAN, the WLAN could move geographical location but the virtual location defined by it would be the same. In an embodiment, the virtual locations are defined by reference to one or more wireless technologies, for example a WiFi identifier and/or GPS provided coordinates. Virtual locations could also be defined using GPS or even WLAN signal strength to subdivide a large wireless network thereby creating a cluster of individual Virtual Locations.

Alternatively the virtual location may be defined by the devices that form it, for example whenever three predetermined devices are within a certain range of each other, they are said to be in a virtual location and carry out the above defined method. The range may be that sufficient for them to communicate with each other using a nominated wireless technology for example Bluetooth. A record of activities performed at this virtual location can be recorded (on the devices rather than on a server) for future reference. Rather than the system being reliant on a server in this example a smaller system could run on each host device.

More generally a virtual location is an area defined by available wireless network technologies (server-client or peer-to-peer) for the purpose of situation or activity profiling. Situation profiling combines the users activities (applications, services, content utilised be users), activity chronology, and user or device profiling to provide enhanced application, service or content customisation.

The process data may be determined by each device within the virtual location uploading its respective data to a central server. Alternatively, each device may use peer-to-peer connections with other devices within the virtual location in order to determine the process data. The process data corresponds to an application executed or a function carried out on the device. Examples include an email client, a web browser, or switching the devices backlight or ringer off. The processes are associated with an activity such as sending and receiving email, surfing the internet, or putting the device in a "sleep" mode. The activities are typically user initiated in the sense that a user of the device activates or instructs the device to carry out the function or application associated with the process. This can include an automatic procedure that a user has previously set-up. For example when entering a virtual location (toilet, library, managers office, customer reception area) divert all incoming calls to my answer phone or turn my ringer off.

The relationship between the process data and the activity based information could be one-to-one, or typically the process data is processed for example by deriving statistics relating to the process data from a number of devices within the location. For example the most popular activity in a virtual location as determined from the process data from all the devices in the virtual location can be provided to a requesting device.

Either a client-server or a peer-to-peer architecture can be used for implementing the automatic gathering and provision of activity based information to the devices within the virtual location. Virtual location definition in a peer-to-peer architecture may use a predetermined virtual location clue such as a WLAN beacon, or alternatively devices within a space or area may form a virtual location according to a predetermined protocol, for example using an ad hoc WLAN in which each device is with range of every other device within the WLAN. Thus the virtual location definition or clue can be the identifier or BSSID and the corresponding beacon.

The virtual location can be defined using multiple wireless technologies, for example WiFi; Bluetooth; UMTS; and/or GPS. In an embodiment a virtual location is defined using a number of clues which combine the wireless technology and a corresponding identifier such as a WiFi BSSID.

Examples of user initiated activities include: establishing an Internet connection; establishing an email connection; establishing a streaming media connection; changing the user interface of the device, for example switching on the backlight or executing a process such as a game. Some of this information may be more specific such as the web-site visited or the game played - though this type of information would typically not be linked to a particular user for privacy reasons, but used only to provide an indication of the most popular web-site or game currently in the virtual location for example.

A time dimension may also be added to the activity based information, which may change depending on the time of day. For example users in a coffee shop at lunchtime may receive different activity based information than users in the same coffee shop after work.

A user profile dimension can also be added to the activity based information, for example the activity based information downloaded to a teenage user of a virtual location may be different to that downloaded for a middle-aged salesman. For example the teenager may be more interested in gaming levels or popularity for the virtual location whereas the salesman may be more interested in the most popular websites visited in the same virtual location. Similarly, mobile police officers may be interested in information related to the activities of previous police officers, such as relevant and/or recent incidents at the same virtual location.

Thus the activity based information downloaded to a device may be provided in the form of a virtual location profile (VLP) whose content may vary depending on the time of day and/or a user profile for the downloading device. The VLP may include for example the most popular websites visited at that virtual location, the most popular games played, the most popular media streamed, and the most common device control resetting such as ringer volume reduction in an eBook zone.

The activity based information provided about a virtual location may be used to infer additional information or context likelihood's, for example a high number of gaming activities might designate a virtual location as a gaming hot-spot. In another example, high eBook application usage may indicate that the virtual location is likely to offer seating and food facilities.

The activity based information associated with a virtual location can also be used by other devices or users not within the virtual location, for example a home personal computer (PC). Where the virtual location can be associated with a geographical location, the activity based information can be mapped for use by others in identifying locations corresponding to certain activity profiles. For example a teenager may use a map based application or search engine on their home PC to find local gaming hotspots, such as places where people in the past (or possibly currently) have played a particular peer-to-peer game. Similarly, a local area suitable for reading an eBook could be identified based on the activities (ie reading eBooks) of others.

In another aspect the presenting invention provides a method of providing activity based information associated with a location. The method comprises automatically determining data about a process on a number of devices within the location, the process associated with an activity; and receiving at another device activity based information which is dependent on the determined process data. The activities are not limited to interactions with a single wireless service provider, and include all of a number of predetermined activities on the devices within the location.

The location may be a virtual location, or it may be a physical location.

The determined process data can be associated with a geographical identifier corresponding of the location, for example GPS co-ordinates or a post code. This data or information can then be used with mapping applications, for example to identify physical locations having a high incidence of a particular activity, such as gaming or a particular P2P game.

### Brief Description of the Drawings

Embodiments will now be described with reference to the following drawings, by way of example only and without intending to be limiting, in which:
Figure 1 illustrates a number of virtual locations according to an embodiment;
Figure 2 illustrates a client-server architecture for automatically gathering activity based data from devices within a virtual location according to an embodiment;
Figure 3 illustrates the provision of activity based information to a device entering a virtual location according to an embodiment;
Figure 4 is a flow chart illustrating a method of operating a device according to an embodiment;
Figure 5 is a flow chart illustrating a method of operating a server according to an embodiment;
Figure 6 illustrates a number of virtual locations according to another embodiment;
Figure 7 illustrates the gathering of activity based information using a peer-to-peer architecture according to another embodiment; and
Figure 8 is a flow chart illustrating a method of operating a device in the peer-to-peer architecture of figure 7.

### Detailed Description

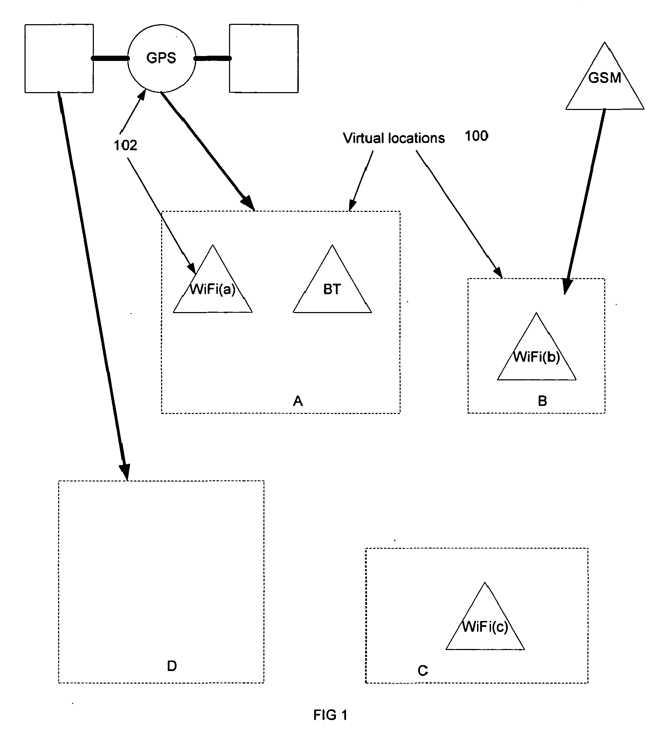

Referring to figure 1, a number of virtual locations 100 (A-D) are illustrated. These virtual locations are defined by reference to a number of virtual location clues, in this case provided by a number of wireless technology providers 102. These wireless service providers 102 include a global positioning system satellite (GPS), WLAN access points WiFi(a), WiFi(b), and WiFi(c), static Bluetooth devices such as printers or PC's BT, and a cellular radio network base station GSM. The clues are provided by an identifier associated with each wireless service provider 102 relied upon to define the virtual location 100. For example the virtual location clue provided by the GPS satellite are coordinates, the clue provided by the WLAN access points WiF(a)-(c) are their respective BSSID's, the virtual location clue provided by the static Bluetooth device is its Bluetooth MAC address, and the clue provided by the cellular base station is the cellular ID. The clues may also comprise an identifier for each respective wireless technology, for example for virtual location C, the clue may be - "IEEE802.11b + BSSID=BT00223029", and may also comprise an encryption key.

The first virtual location 100A is defined according to predetermined GPS coordinates, a WLAN identifier WiFi(a), and a Bluetooth device MAC address BT. Thus to be in virtual location A, the GPS coordinates of a candidate device must be within a predetermined range - of longitude, latitude, and altitude. The candidate device must also be able to receive the beacon from the WLAN access point (102WiFi(a)), and the beacon from the static Bluetooth device (102BT). Thus each of the identifiers or clues received matches those required for defining the virtual location A. If one of these virtual location identifiers or "clues" if not detected by the candidate device, then it is not within the virtual location A - it may perhaps be in another virtual location. Indeed it is possible that one virtual location may be within a larger virtual location, for example when seeing only the GPS coordinates and the WiFi(a) clues, the candidate device may be within a larger virtual location A' (not shown).

The second virtual location B is identified or defined by reference to identifiers for two wireless service providers 102, and is detected or confirmed when a candidate device (not shown) can detect both the beacon from another WLAN (102WiFi(b)) and the beacon from the cellular base station (GSM). This may or may not overlap the first virtual location A.

The third virtual location C is defined solely by reference to a third WLAN beacon - 102 WiFi(c) - provided by the corresponding wireless service provider or access point 102. If a device can detect this WLAN (WiFi(c)), then it is said to be in the virtual location C. Note that this virtual location C is not associated with a permanent physical location, as the WiFi(c)access point 102 for the WLAN could be moved to another geographical location. This compares with the first virtual location A, which is defined by reference to GPS coordinates and so is associated with a permanent physical location - unless it is later defined by different location clues.

The fourth virtual location D is defined solely be reference to geographical coordinates provided by the GPS wireless service provider 102. The "clue" in this case is simply geographical coordinates within a predetermined range.

The virtual locations A-D are all defined by wireless technologies - GPS (global positioning system), WLAN for example WiFi, cellular wireless such a GSM, CDMA2000, UMTS, and piconets such a Bluetooth. Other types of wireless technologies could also be used, and the virtual locations 100 may be defined by reference to two or more wireless technologies for greater certainty and accuracy. In some cases redundancy may also be an issue, in which case if for example the WLAN access point 102 (WiFi(a)) of virtual location A was disabled, the virtual location A might be temporarily redefined according to the remaining two wireless technologies - GPS and BT.

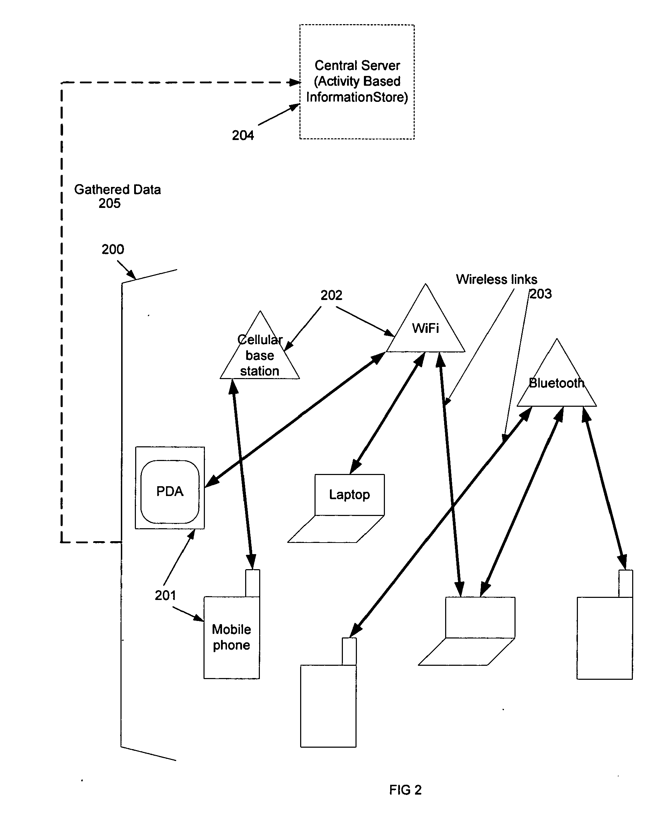

Figure 2 illustrates a number of devices 201 within a virtual location 200 and communicating with a number of wireless access points or gateways 202, using wireless links 203. The communication between the devices and the wireless service providers 202 allow the devices to carry out various activities or processes. Examples of activities include surfing the Internet, sending and/or receiving email, and streaming media. The activities carried out need not involve the wireless communications links 203, for example playing a game on a device 201, or switching on the backlight. The activities may be user initiated such as surfing the Internet, or may be automatic such as adjusting the device's sound output according to ambient sound levels. Various processes are carried out on the device in order to support the user activities, for example to support a user surfing the Internet a wireless application must establish and maintain a connection with one of the wireless service providers 202, and an Internet browsing application must be executed. Data about the types of processes carried out on each device 201 are monitored and uploaded to a central server 204, via a suitable upload channel 205. The uploading 205 of the processes or activity based data may be carried out using the wireless links 203 or some other manner. For example some devices may have a wired as well as a wireless capability, in which case the uploaded or determined process data may be uploaded using the wired link.

As discussed with respect to figure 1, the virtual location 200 each of the devices 201 is operating within can be defined by reference to the various wireless service providers 202 shown.

The activity data uploaded may simply be a virtual location identifier (eg A from figure 1) together with a predetermined activity type such as playing a game, sending email and so on. In this way the user's identity is not associated with the activity, and merely the numbers or types of different activities being engage in within the virtual location is made available to the server 204. Devices using the system may be configured to send the processes or activity data periodically, for example once every minute. More specific information may be gathered, for example actual URL's visited during web browsing activities, or songs downloaded or Internet radio stations "tuned" to during streaming activities. In this way, the most requested song in the virtual location may be made available to other user's in the location. Similarly at a concert, where an unknown band has taken the stage, the most popular activity may be visiting the band's web-site, and this may then be provided to users of the system, for example so that they can go straight to the web-site as well. Thus the activity based information provided to a user in a virtual location may simply be the most popular activities within a number of categories.

Typically the data about processes activated or running on a device described above is related to user initiated activity in which the user is required to actuate a user interface button for example, and that is context or location dependent, such as an eBook or Gaming application. However in some configurations it may be extended to location independent activities such as receiving information, for example emails.

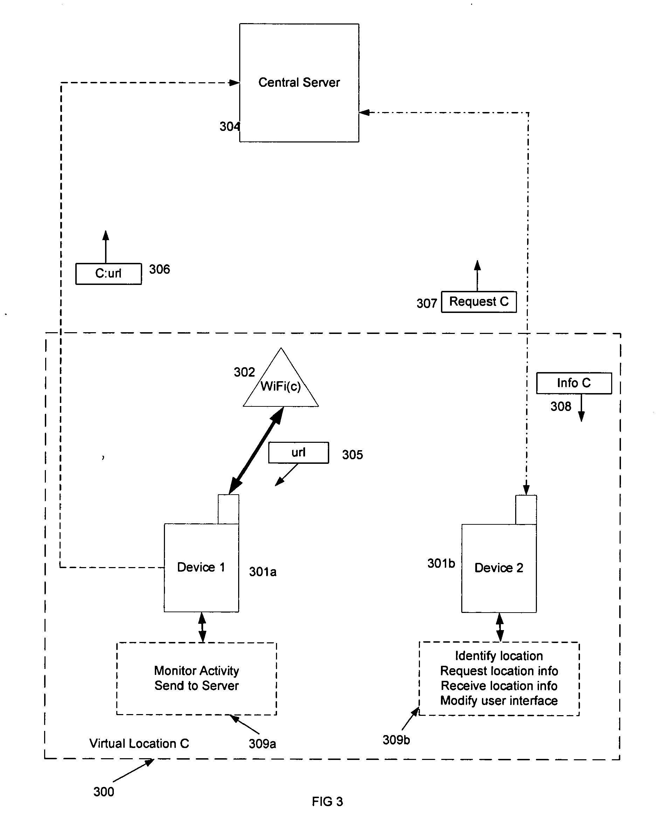

Figure 3 illustrates determining process data on a first device 301a and receiving activity based information at another device 301b within the same virtual location 300. In the example the first device 301a is interacting with a WLAN access point WiFi(c) 302 to surf the Internet, and has just downloaded a website 305. Additional functionality 309a within the device 301 a monitors the processes carried out on the device to support these user activities, and sends this process data or data dependent on it to a central server 304. The data 306 uploaded to the server 304 may be a periodic packet with the virtual location's identifier C together with the URL of the web-site visited, or simply a code corresponding to the generic activity of web-browsing or internet surfing; and depending on configuration of the system the connection (eg to WiFi(c)) supporting this. The central server 304 may process this data from a number of similar devices 301 within the same virtual location C, for example by determining the most visited web-sites within the last ten minutes within the virtual location, or simply that the most popular current activity within the virtual location C is web-browsing.

When a second device 301b enters the virtual location C, additional functionality 309b within it determines the virtual location C and requests 307 from the system the corresponding activity based information. Determining the virtual location may involve noting the various wireless service 302 available to the new device 301b, and sending this information with the request 307 to the server 304 which returns a corresponding virtual location identifier C. The server 304 forwards the processed information 308 (and if appropriate the virtual location identifier C) to the second device 301b, which may simply display this for the user, or may use this information to reconfigure the device for use in the virtual location C. Thus a user of the new device 301b may be able to determine that a particular url or web-site is currently very popular within the virtual location, and may be prompted to visit this. Alternatively at a lower level of information granularity, the user of the device may be informed that the most popular activity within the virtual location is media streaming, and the device's start top-level menu may be adjusted to show this activity at the top of the list. Each of the devices 301 within the virtual location C may be configured to periodically request 307 activity based information from the server 304, or this might be provided automatically to each device "registered" in the virtual location C.

The embodiment might be alternatively configured such that each device 301 monitoring its own processes sends an "activity ranking list" to the central server 304, rather than each process at a time.

Alternatively or additionally, each device 301 may be further configured to notify the server 304 of its type, for example laptop or mobile phone. In this way, the process data provided by each device 301 may be categorised such that devices only receive activity based information for their own device type within the virtual location. Thus what occurs on a laptop may have little effect on what information is provided to a mobile device which has substantially less processing power and likely less bandwidth over wireless communications links. Alternatively the same activity based information may be downloaded to each device 301, but the device itself may be configured to handle it differently depending on its device type.

Each device may also or alternatively be categorised by a user type or profile. Examples include teenager interested in gaming; middle aged executive; elderly retired; male/female. The user profile may be extended to membership of special interest groups such as the police; specific employer or company; fan club; and so on. This may be indicated to the server using a predetermined tag on capable devices for uploading gathered process data 306, and requesting virtual location profile (VLP) data or activity based information in a request 307. The server 304 can then send VPL or information 308 according to the device's associated user profile.

The server 304 may also be configured to vary the downloaded activity based information according to the time of day. Thus the activity based view of a café/bar at lunchtime may differ significantly from the activity based view of the same virtual location in the evening. Similarly the activity based characterisation of the virtual location may be different at weekends compared with week days; or there may even be seasonal or annual variations.

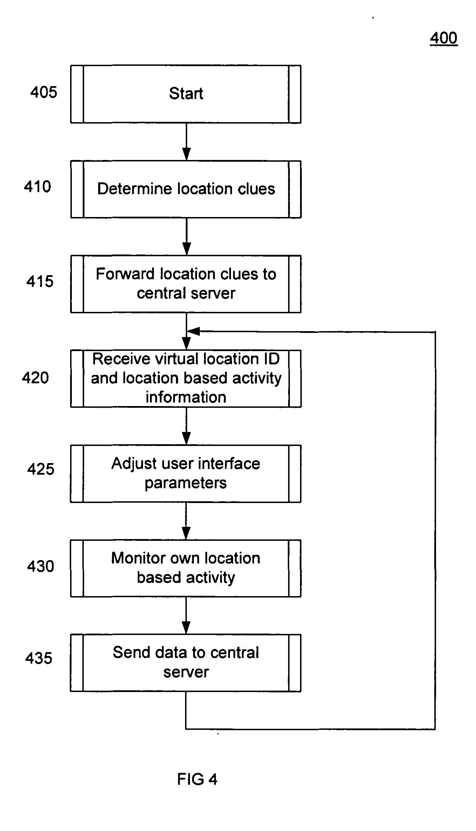

Figure 4 illustrates a method of operating a device according to an embodiment. Referring also to figure 3, when a device 301b is operating according to the method (400), it looks for wireless systems or service providers 302 that can offer clues as to its virtual whereabouts or location. These can include GPS, Bluetooth, GPRS, and WLAN signatures or beacons. The device 301b monitors for predetermined virtual location clues (410), such as identifiers associated with the identified wireless systems 302, for example GPS coordinates, WLAN BSSID, and GPRS cell ID. The device may be configured to periodically send these clues (415) to the system server 304, or it may have various virtual locations pre-identified within its memory and then simply match the detected clues with those stored in order to determine that it has entered the virtual location. As a further alternative it may only request a virtual location identity when a new clue and/or wireless service provider 302 is identified.

The device then receives the virtual location information (420), and if required a virtual location identifier C. The device may not require the virtual location identifier at all, and may simply receive the activity based location information. The device may be configured simply to display or store this information, or it may be configured to adjust an operating or user interface parameter dependent on the received activity based information (425). For example the user interface start menu may be rearranged to put the most popular activities currently or historically engaged in by others in the virtual location towards the top of the menu. As mentioned above, the other users on which the downloaded activity based information is dependent may be restricted to suers having the same profile - for example middle aged executive compared with teenage gamer. In an alternative arrangement, the user may be directly prompted as to whether they wish to start the most popular activity. If the virtual location corresponds to a darkened room for example, other users may have switched their backlights on, and the device of the user newly entering the virtual location may be configured to automatically switch its backlight on.

Another example of device adjustment or automatic re-configuration when receiving the activities based information, the device may determine that it is unlikely to carry out certain activities such as playing games, and may therefore shut down its 3D graphics capability in order to reduce power consumption. The device may also be configured to provide a quick-link list of things to do in the new virtual location. Other examples include changing on-line presence from "Available" to "Do not disturb" in a chat application for example, automatically downloading some service or content, and vibrate on ringer off.

The activity based information (or VLP) provided to a user device by the system or server is system configurable. For example the information may simply be a list of the most popular activities within certain predefined activity categories such as web browsing, media streaming, gaming, and device re-configuring. Respective activity examples include most popular web-sites visited within the virtual location, most popular songs or videos streamed, most popular peer-to-peer games played, and the most common device adjustments such as ringer off and/or backlight on. These lists of activities in each activity category may be further categorised for example according to user profile and/or time.

The provided activity based information may alternatively relate to changes or anomalies in activity patterns. For example some groups (eg Police) may be interested in building a view of the least popular activities or significant changes in type of content consumed at a location.

The device 301 is also likely to be configured to automatically monitor its own user activities (430), for example by simply noting a code for each of a number of predetermined processes - web-browser application, email client, media streaming client, game playing application, e-book reading application, and so on. This information may be accumulated locally over a period, and then sent to the central server (435). This may even extend to the device 301 storing activity related data for a number of different virtual locations and then uploading the data to the central server 304 say at the end of the day, when it is synchronised with a wired PC for example. Alternatively each new process activated on the device may trigger it to report this to the server 304. As a further alternative, the device 301 may have a standard template which is updated periodically and forwarded to the server after a period. The recorded processes can be time-stamped in order to aid processing by the central server, and the data sent may also include the length of time over which a process was active. The method (400) then returns to the receiving activity based information step (420) to refresh this information. In this way, users of devices in a virtual location may affect each other over time, for example an event may cause a number of users to access a particular web-site, which in turn may prompt other users in the virtual location to do the same.

The system may be configured to bias towards current or recent user activity information, or it may be more historically based, using data about the processes run on many devices over a considerable period of time.

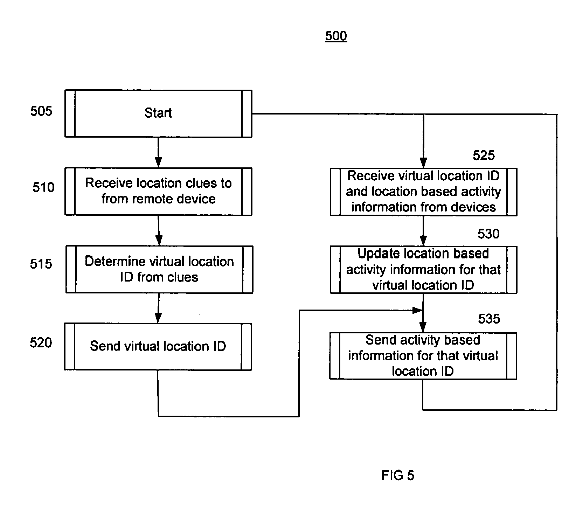

Figure 5 shows a method for the central server 304 which receives device process data from a number of devices 301 in a number of virtual locations 300. The method (500) comprises two branches, in the first the server processes requests for identifiers for virtual locations, and receives clues from devices (505) such as the various wireless services providers it is able to currently access and/or their identifiers. The server determines from these clues a corresponding virtual location (515). This may be achieved simply by attempting to match the received clues with clues corresponding to a number of predetermined virtual locations. The server 304 then retrieves and sends the virtual location identifier to the requesting device (520). The method (500) then moves on to sending activity based information for that virtual location to the requesting device (535).

The second branch of the method (500) relates to monitoring and sending activity based information to devices within a virtual location. The server 304 receives data about processes on each device within a virtual location (525), and updates the activity based information it holds for that virtual location (530). This may comprise re-processing all the stored activity based information, for example the new process data may be used to adjust a "top activities" list within the activity based information. The updated information is then sent to the devices within the corresponding virtual location (535), and the method returns to receive further data about processes on the devices (525).

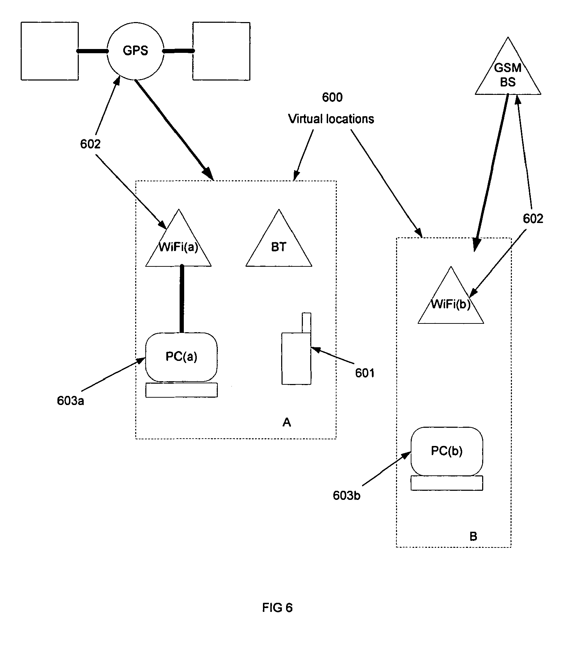

Figure 6 illustrates another embodiment in which virtual locations can include non-wireless devices. The virtual locations 600 include wireless devices 601 which determine whether they are within a virtual location 600 by reference to wireless clues associated with a number of wireless service providers 602. For example in the case of the first virtual location A, the wireless clues 602 are a coordinates range provided by the GPS system, a WLAN access point identifier WiFi(a), and a Bluetooth MAC address BT. If the device 601 detects all three clues 602, then it can assume it is within virtual location A.

However a fixed or wired device 603a can also be determined to be within the virtual location A without reference to the wireless clues 602. In this example, a personal computer PC is connected for example by Ethernet to the WLAN access point WiFi(a), and by virtue of the type of wired connection (Ethernet is typically used only locally) is determined to be within the virtual location. For example the system could automatically link wired devices together by fact that they are all connected into a switch and use specific IP addresses within a certain range. The wireless access point that provides the wireless network would also be connected on to the same LAN and switch and have a specific IP addresses within the same range. Also the LAN switch and WLAN access point may be connected to the Internet via a specific router or gateway. An external service could therefore assume that any information request via this router or gateway was within the same virtual location. Alternatively a static PC could simply be assigned to a virtual location. In this way the system still records user initiated activities (time, device and user specific) at specified locations and provides that information back to any device, service, or application within that virtual location that could benefit.

For example, in a library setting corresponding to a virtual location, all the wired computers provided to users of the library may be determined to be within the library virtual location. The wired device 603a may in fact not be within the physical range of the various wireless service providers 602 providing the virtual location clues, however is consider logically to be within the virtual location.

In the example of virtual location B, there is no Ethernet or other (relatively) short distance wired connection between the wired device 603b and a wireless service provider 602 associated with that virtual location. In this case, a personal computer PC or other device is not at all associated by physical location with other devices within the virtual location, but is logically associated by being assigned as being part of the virtual location B. The remote device 603b may be connected to the server via the internet for example. For example, a pub regular may be in another country on business but may want to virtually interact with his friends in their usual or local pub, and may do so according to this embodiment by assigning the PC the virtual location identifier B of the virtual location B, in order to receive the activities based information corresponding to the virtual location B from the server. The assigned PC 603b may or may not upload data about its own activities or processes to the central server. In this way, the remote PC 603b may also be influenced by what other devices are doing within the virtual location B. This might be extended for example to supporters of a football team, some of whom may not be in a particular location to watch a match, but want to participate remotely at the location with other members of the football team supporters club. This concept could even be used as a way to build and support virtual communities, groups and Special Interest Groups.

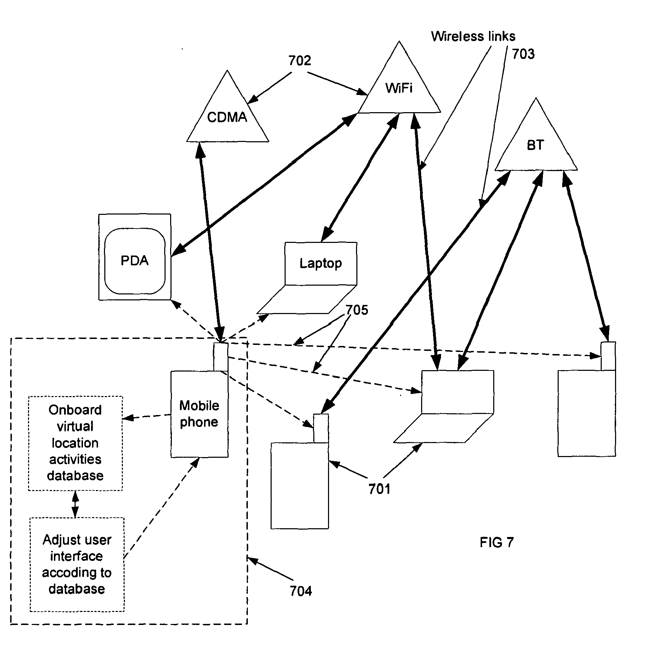

Figure 7 illustrates another embodiment using a peer-to-peer architecture to implement the activities based view of a virtual location. As with the arrangement of figure 2, each of the devices 701 is using a number of wireless gateways or service providers 702 to perform various activities such as surfing the Internet. Other activities not requiring wireless links 703 may also be carried out on the devices 701. Each device 701 also includes additional functionality 704 to carry out the monitoring of device based processes within the virtual location. Each device polls 705 each other device 701 within the virtual location 700 about the types of activities it is engaging in. Instead of this data being stored in a central server, each respective device 701 stores this information locally and if so configured, adjusts its user interface or some other operating parameter depending on the activities based information received.

A protocol for determining and agreeing a virtual location can be used, for example all devices that recognise the Bluetooth piconet coordinator BT, the WLAN access point WiFi, and the cellular base station CDMA.

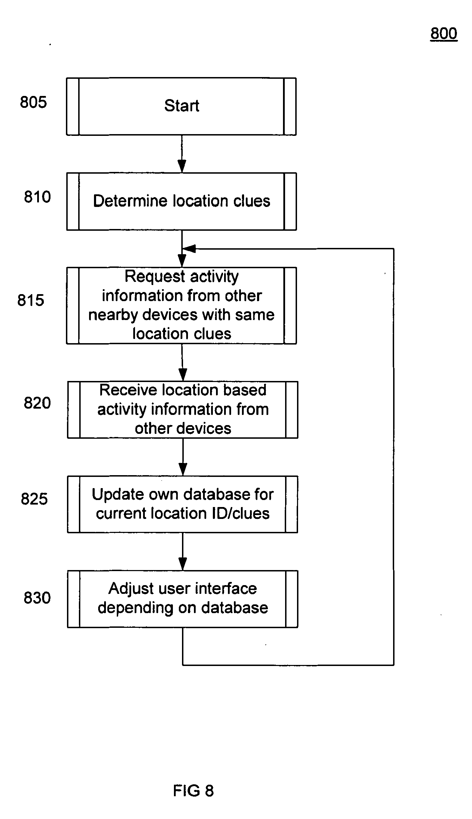

Figure 8 is a flow chart showing operation of a device using the peer-to-peer architecture of figure 7. Following initiation (805) of the system or method (800), the device determines location clues (810) for example various wireless technology beacons and GPS coordinates. It agrees with other wireless devices within its vicinity that it is within a particular virtual location, and requests data from other devices using the same virtual location identifier about the user processes running on them (815). Activity based information from the other devices in the same virtual location is received (820), and the device updates its own on-board database or store of activity based information within the virtual location (825). The device may then adjust its user interface or other operating parameter as described above according to the activities based information recovered (830). The method then returns to the requesting step (815) in order to refresh the activity based information for the devices current virtual location.

Although not shown, the device is also configured to respond to requests for its own processes data from other devices within the same virtual location, forwarding this data to them.

Whilst the embodiments have been described with respect to providing or acting on downloaded activity based information, this information could also be used to infer further information or context about a virtual location. For example a high number or percentage of eBook applications may indicate a library or coffee shop with a high likelihood of having seating and food facilities for reading eBooks.

Whilst embodiments have been described with respect to automatically determining process data related to user activities in a virtual location, and providing this to other users within the virtual location, this gathered information or process data could additionally or alternatively be provided to others who are not in the virtual location. For example a user at a home PC may be reviewing the activity based view of a number of nearby locations, to identify a gaming hotspot. This facility may also be used by others at significant geographical distances but who are intending to visit a city and want to view it in an activity based way, for example in order to plan a nightlife "tourist" itinerary. The gathered process data in this case may be associated with a geographical location, which may be provided using a definition of the virtual location which includes real coordinates such as provided by GPS.

This geographically associated activity based information can then be used by other users, for example in mapping and/or search engine type applications. Thus a map of a city may show gaming hotspots, quiet spaces for reading eBooks, areas having high numbers of web-site hits relating to a particular pop-star, or even bars or cafes where certain user profiles are prevalent.

The skilled person will recognise that the above-described apparatus and methods may be embodied as processor control code, for example on a carrier medium such as a disk, CD- or DVD-ROM, programmed memory such as read only memory (Firmware), or on a data carrier such as an optical or electrical signal carrier. For many applications embodiments of the invention will be implemented on a DSP (Digital Signal Processor), ASIC (Application Specific Integrated Circuit) or FPGA (Field Programmable Gate Array). Thus the code may comprise conventional programme code or microcode or, for example code for setting up or controlling an ASIC or FPGA. The code may also comprise code for dynamically configuring re-configurable apparatus such as reprogrammable logic gate arrays. Similarly the code may comprise code for a hardware description language such as Verilog ^{™} or VHDL (Very high speed integrated circuit Hardware Description Language). As the skilled person will appreciate, the code may be distributed between a plurality of coupled components in communication with one another. Where appropriate, the embodiments may also be implemented using code running on a field-(re)programmable analogue array or similar device in order to configure analogue hardware.

The skilled person will also appreciate that the various embodiments and specific features described with respect to them could be freely combined with the other embodiments or their specifically described features in general accordance with the above teaching. The skilled person will also recognise that various alterations and modifications can be made to specific examples described without departing from the scope of the appended claims.

## Claims

1. A method for providing activity based information for a virtual location, the method comprising:
defining a geographical location;
automatically determining data about a process associated with an activity on a device within the location;
receiving at another device activity based information which is dependent on the determined process data and the geographical location.

2. A method according to claim 1 wherein the activity based information comprises a geographical identifier.

3. A method according to claim 1 or 2 wherein the determined process data comprises a geographical identifier.

4. A method according to claim 2 or 3 wherein the geographical identifier comprises GPS coordinates and/or a post code.

5. A method according to any one preceding claim wherein the determining data about activity associated processes comprises uploading said data to a server and wherein the activity based information is downloaded from the server to the receiving device.

6. A method according to any one preceding claim wherein the determining data about activity associated processes comprises the receiving device requesting said data from other devices within the virtual location over peer-to-peer communication links; and wherein receiving said information comprises receiving said data over said links.

7. A method according to any one preceding claim wherein the activity comprises: establishing an Internet connection and/or browsing the Internet; establishing an email connection; establishing a streaming media connection; downloading files; uploading files; changing the user interface of the respective device; executing an application on the respective device.

8. A method according to any one preceding claim wherein the received activity based information comprises a number of the most popular activities in a number of activity categories.

9. A method according to any one preceding claim wherein the automatically determined process data comprises an indication of each of a number of predetermined processes running on the device together with a virtual location identifier.

10. A method according to any one preceding claim wherein the received activity based information is further dependent on a user profile associated with the other device.

11. A method according to any one preceding claim wherein the received activity based information is further dependent on the time at which it is received.

12. A method according to any one preceding claim wherein operational parameters of the receiving device are adjusted according to the received activity based information.

13. A carrier medium carrying processor code which when implemented on a processor is arranged to carry out a method according to any one preceding claim.

14. A system for providing activity based information for a virtual location, the system comprising:
means for defining a geographical virtual location;
means for automatically determining data about a process associated with an activity on a device within the virtual location;
means for receiving at another device within the virtual location activity based information which is dependent on the determined process data and the geographical location.

15. A device comprising:
means for identifying a geographical location;
means for automatically determining data about a process on the device associated with an activity;
means for receiving activity based information which is dependent on determined process data associated with other devices and the geographical location.

16. A device according to claim 15 wherein the activity based information and/or the determined process data comprises a geographical identifier.

17. A device according to claim 15 or 16 wherein the means for determining data about activity associated processes comprises means for uploading said data to a server and wherein the means for receiving activity based information comprises means for downloading said information from the server.

18. A device according to claim 15 or 16 wherein the determining data about activity associated processes comprises means for requesting said data from other devices within the virtual location over peer-to-peer communication links; and wherein the means for receiving said information comprises means for receiving said information over said links from the other devices.

19. A device according to any one of claims 15 to 18 wherein the means for determining the process data comprises means for sending an indication of each of a number of predetermined processes running on the device together with a virtual location identifier.

20. A device according to any one of claims 15 to 19 wherein the received activity based information is further dependent on a user profile associated with the device.

21. A device according to any one claims 15 to 20 and arranged such that operational parameters of said device are adjusted according to the received activity based information.

22. A server for providing activity based information for a virtual location, the server comprising:
means for identifying a geographical location;
means for receiving from a device within the location automatically determined data about a process associated with an activity on the device;
means for forwarding to another device within the virtual location activity based information which is dependent on the determined process data and the geographical location.
